# FASCICULE DE BREVET EUROPEEN

(11) **EP 0 789 151 B1**
(45) Date de publication et mention de la délivrance du brevet: **10.05.2000**
(21) Numéro de dépôt: 96440015.4
(22) Date de dépôt: 06.02.1996
(51) Int. Cl.: F16C 17/03

(54) **Palier hydrodynamique comportant une portée fixe et des patins basculants**
Hydrodynamisches Lager mit einer festen Gleitfläche sowie kippbaren Gleitsegmenten
Hydrodynamic bearing comprising a fixed sliding surface and tiltable sliding pads

(43) Date de publication de la demande: 13.08.1997
(73) Titulaire: FLENDER GRAFFENSTADEN, F-67400 Illkirch-Graffenstaden (FR)
(72) Inventeur: Weber, Francois, F-67400 Illkirch (FR)
(74) Mandataire: Littolff, Denis

(56) Documents cités:
- US-A- 4 597 676
- US-A- 4 686 403

## Description

La présente invention concerne d'une manière générale les paliers selon le préambule de la revendication 1 servant de supports aux arbres rotatifs, et vise aussi ceux de ces paliers utilisés avec des arbres de grandes dimensions tournant à grande vitesse, par exemple les arbres des mécanismes à engrenages (multiplicateurs et réducteurs de vitesse) destinés à entraîner et/ou être entraînés par des turbomachines.

Ces paliers, eu égard aux contraintes technologiques de montage et à leur grande durée de vie, sont presque toujours du type hydrodynamique. Toutefois, les paliers hydrodynamiques possèdent leurs limites propres qui conditionnent les performances et la durée de vie des multiplicateurs et réducteurs, de sorte que des efforts considérables ont été déployés ces dernières années pour optimiser lesdits paliers. L'invention vise une importante nouvelle étape dans une telle optimisation.

On connaît bien entendu les paliers à profils fixes, formés par deux lobes fixes dans un corps et utilisés essentiellement sur une ligne d'arbres à petite vitesse. Ces lobes peuvent être décalés ("offset halves") par rapport à l'axe du palier, l'arbre prenant de lui-même sa position optimale quand il atteint sa vitesse de rotation nominale. Dans un tel cas, la surface d'application des charges est maximale, de sorte que la perte de rendement du palier aussi bien que de l'engrenage est également maximale.

On a par ailleurs développé des paliers dits à patins oscillants, dans lequels des patins (généralement cinq) sont répartis équidistants sur la surface interne du corps, et sont montés, soit mobiles en basculement, le long d'une ligne de contact avec ladite surface parallèle à l'axe du palier, soit mobiles sur 360° autour d'une rotule sphérique fixée à ladite surface interne du corps. Dans ce cas, les patins basculent pour prendre leur position optimale, au moment de la rotation de l'arbre.

De tels paliers à patins oscillants sont actuellement considérés comme les mieux appropriés pour une ligne d'arbres à grande vitesse (cf. "Calcul des caractéristiques statiques et dynamiques d'un palier à patins oscillants", Laboratoire de Mécanique des Contacts, INSA, LYON, Juin 1983). Au surplus, dans ce cas, il est également avantageux de monter ces paliers oscillants sur des rotules dont la sphère est décentrée par rapport au centre du logement du patin.

Le document US-A-4 597 676 divulgue un palier du type mentioné ci-dessus.

L'invention repose sur la constatation expérimentale surprenante que des résultats encore supérieurs peuvent être obtenus avec ce palier du type mentioné ci-dessus. Si il est caractérisé par les caractéristiques de la deuxième partie de la revendication 1.

Comme il sera développé plus en détail ci-après, la comparaison expérimentale entre des paliers selon l'invention et des paliers classiques à patins oscillants, du point de vue de la température maximale, des pertes de charge et de la tenue aux vibrations, met en évidence une nette supériorité des paliers selon l'invention.

On va tout d'abord décrire l'invention plus en détail, en se référant à deux modes de réalisation, illustrés au dessin annexé, sur lequel :
- La figure 1 est une coupe axiale suivant I-I de la figure 2 d'un premier mode de réalisation de l'invention, dans lequel le contact des patins oscillants avec la surface interne du corps est linéique ;
- La figure 2 est une demi-coupe transversale suivant Il-Il et une demi-vue de bout de la figure 1 ;
- La figure 3 est une coupe partielle suivant III-III de la figure 2 ;
- La figure 4 est une coupe axiale suivant IV-IV de la figure 5 d'un second mode de réalisation de l'invention, dans lequel les patins oscillants sont montés sur des rotules à pivots décalés ;
- La figure 5 est une demi-coupe transversale suivant V-V et une demi-vue de bout de la figure 4 ;
- La figure 6 est une coupe partielle suivant VI-VI de la figure 5 ;
- La figure 7 représente le schéma de l'appareil d'étude comparative des paliers ;
- La figure 8 illustre graphiquement les résultats chiffrés réunis au tableau II ;
- Les figures 9 et 10 illustrent graphiquement les résultats chiffrés réunis au tableau III ;
- La figure 11 illustre graphiquement les résultats chiffrés réunis au tableau IV ;
- La figure 12 illustre graphiquement les résultats chiffrés réunis au tableau V.

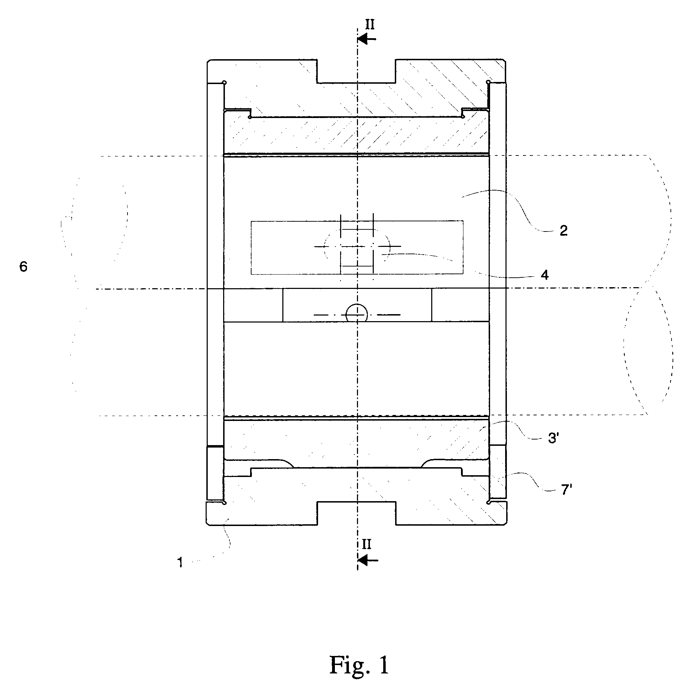

En se référant tout d'abord aux figures 1-3, on y a représenté un palier selon l'invention, se composant d'un corps 1 équipé de trois surfaces d'appui, à savoir :
- un lobe fixe 2 s'étendant sur environ 115° d'angle,
- deux patins oscillants 3-3' s'étendant chacun sur environ 60° d'angle.

Le lobe fixe 2 est monté dans le corps 1 par tout moyen approprié connu pour la construction des paliers à profils fixes (vis ou plots). Il est lubrifié en amont par une rainure 4 de manière traditionnelle.

Chaque patin oscillant présente un rayon de courbure inférieur au rayon de la surface du corps, de sorte qu'il prend assise sur cette surface le long d'une ligne autour de laquelle il peut basculer librement. En l'absence de l'arbre 6, il est maintenu en place par une bague d'arrêt désignée par 7-7'. Quand l'arbre est en place et atteint sa vitesse de rotation nominale, chaque patin 3-3' bascule pour prendre sa position optimale, sans aucun contact.

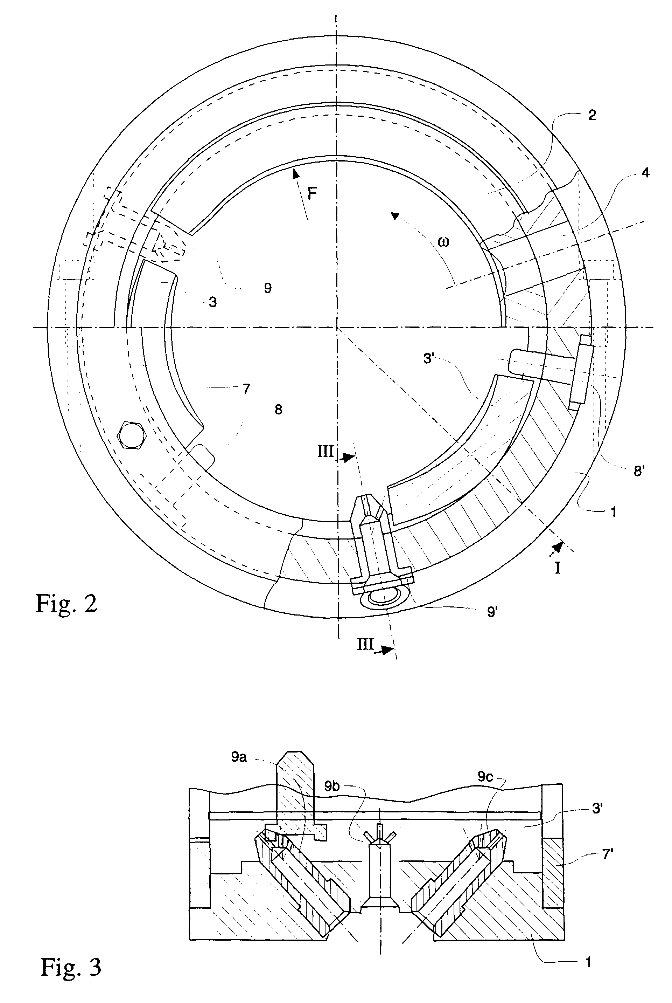

Par ailleurs, chaque patin est situé au voisinage du lobe fixe 2, et est constamment en butée circonférentielle sur des plots 8-8' en aval et sur des buses de lubrification 9-9' en amont. La figure 3 montre la répartition de chaque ensemble de trois buses, à jets dirigés 9a, 9b, 9c.

L'arbre 6 tourne dans le sens ω et la charge est orientée dans la direction de la flèche F.

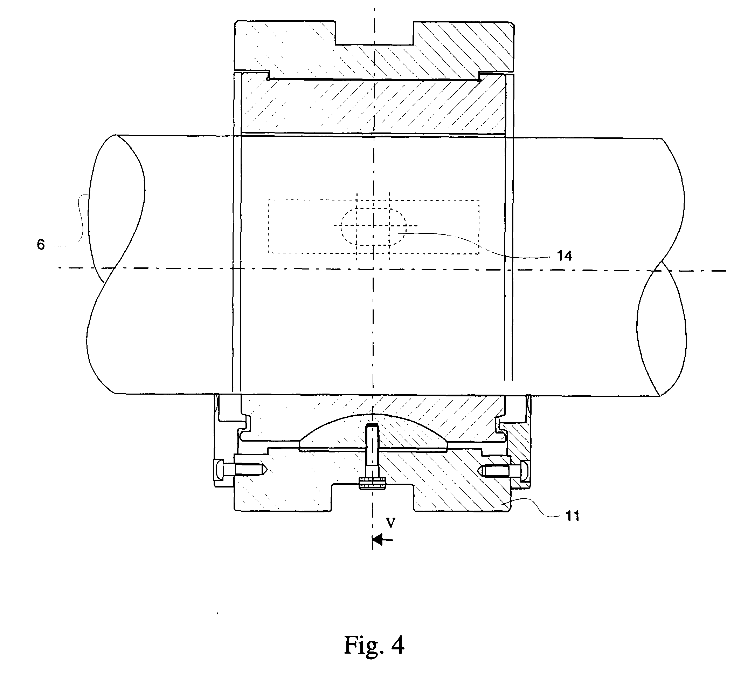

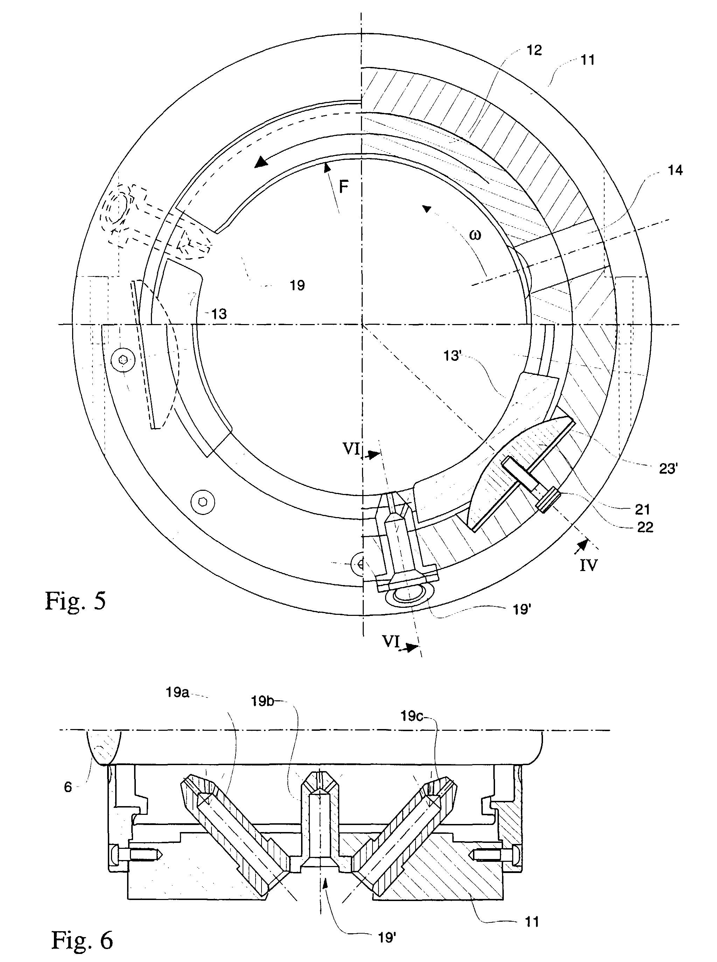

En se référant aux figures 4-6, on retrouve un corps 11 auquel un lobe fixe 12, s'étendant sur environ 115° d'arc est fixé par exemple par des vis ou des plots, et lubrifié en amont par une rainure 14 et une paire de patins oscillants 13-13' s'étendant sur environ 60° d'arc au voisinage des extrémités du lobe fixe, et en butée circonférentielle sur des plots (non représentées) en aval, et sur des buses de lubrification 19-19' en amont, à jets dirigés (voir figure 6).

A la différence toutefois des patins 3-3' qui ne sont libres qu'en basculement dans le sens de rotation de l'arbre, les patins 13-13' sont montés sur l'intérieur du corps par l'intermédiaire d'articulations à rotule comportant une calotte sphérique 21, maintenue sur le corps 11 par une vis 22, et coopérant avec un logement en forme de cavité sphérique correspondant dans la face postérieure du patin 13-13'.

Entre la face postérieure de la calotte 21 et la surface interne du corps 11 (voir la référence 23') est intercalée une pièce d'ajustement, assurant la précision de la cote de hauteur du patin 13, ce qui évite d'avoir à l'usiner, et permet en même temps d'en régler le jeu.

L'arbre 6 tourne dans le sens ω et la charge est appliquée dans la direction de la flèche F.

Selon une variante entrant dans le cadre de l'invention, les éléments de l'articulation à rotule, à savoir l'axe de la calotte 21 et l'axe de la cavité sphérique du patin 13, sont décalés, de manière à créer un pivot décentré assurant de meilleures performances au palier.

Dans cette seconde variante, non seulement les patins peuvent basculer dans le sens de la rotation de l'arbre, mais au surplus ils peuvent également basculer dans le sens perpendiculaire, c'est à dire parallèlement à l'axe du palier, pour s'adapter à la flexion éventuelle de l'arbre.

On notera que la longueur approximative totale des surfaces de portée du lobe fixe et des deux patins est d'environ 235° d'arc. Si l'on attribue aux plots et buses assurant la butée circonférentielle des patins une longueur totale d'environ 50° d'arc, il subsiste donc, entre lesdits patins, un espace dégagé représentant environ 65° d'arc, sur lequel n'est appliquée aucune charge. On peut attribuer au moins en partie à cette particularité les performances supérieures des paliers selon l'invention, comme il va être exposé ci-après par référence aux études expérimentales et théoriques.

On doit, à cet égard, considérer que, la charge étant dirigée vers le lobe fixe, comme illustré par la flèche F sur les figures 2 et 5, et les patins jouant seulement un rôle de maintien, à savoir la limitation - voire la quasi-annulation des vibrations, et non une capacité de charge, leur position doit satisfaire un compromis entre la "raideur" du palier et son rôle amortisseur. C'est la raison pour laquelle ils sont, selon l'invention, aussi proches que possible du lobe fixe, à savoir le patin gauche (3 ou 13) améliorant la portance et le patin droit (3' ou 13') assurant le compromis optimal entre raideur et amortissement, avec un intervalle de vide déterminé. Une étude théorique préliminaire a permis d'évaluer les positions optimales des pivots. Les études expérimentales ont confirmé l'adéquation des hypothèses théoriques.

On va maintenant donner un résumé succinct des études expérimentales auxquelles on s'est référé ci-dessus.

Le but des essais a été l'étude comparative de paliers à 5 patins oscillants, à pivots soit centrés, soit décalés, et d'un palier hybride à un lobe fixe porteur et deux patins oscillants à pivots stabilisateurs.

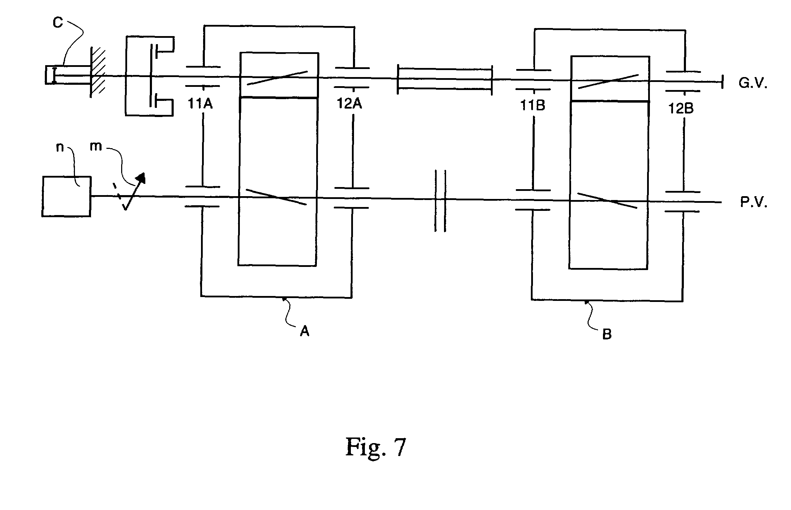

A cet effet, on a utilisé un couple d'appareils dont le schéma, reproduit à la figure 7, illustre le principe des essais dits "dos à dos". Les deux appareils utilisés sont identiques par leur train et leur entraxe. L'un fonctionne en multiplicateur (machine A) et l'autre fonctionne en réducteur (machine B). Ils forment ainsi une chaîne à cinématique fermée à l'intérieur de laquelle, par différents moyens, il est possible de créer des mises sous contraintes internes (couples sur arbres et efforts sur les dentures) correspondant aux efforts nominaux des appareils. Sur cette figure, les flèches matérialisent les flancs actifs des dentures. La mise en mouvement de l'ensemble est obtenue au moyen d'un moteur M accouplé au bout d'arbre de la ligne 4 petite vitesse (P.V.), tandis que la mise sous charge intervient au moyen d'un dispositif C en bout d'arbre grande vitesse (G.V.).

Le principe de base de cette mise sous charge de la chaîne cinématique est le suivant :

L'ensemble de la ligne d'arbres possède une raideur torsionnelle globale constante, de sorte que si en un point d'accouplement sur la ligne d'arbres, on réalise un déphasage angulaire relatif entre les deux plateaux d'accouplement, il en résulte un couple de charge proportionnel au déphasage. Suivant la raideur torsionnelle de la ligne, le couple nominal des appareils sera atteint pour des valeurs de déphasage plus ou moins élevées.

Dans ce dispositif, le déplacement axial d'un mobile par rapport à la denture conjuguée provoque la rotation relative souhaitée. Ce mouvement est obtenu grâce à l'utilisation d'une butée à patins oscillants sur laquelle, les efforts axiaux de mise sous charge s'exercent par l'intermédiaire d'un vérin hydraulique haute pression autobloquant C. Ces efforts sont égaux et opposés aux réactions axiales sur les dentures correspondant à la charge transmise. La charge radiale appliquée sur les paliers résulte donc ici de l'effort axial du vérin appliqué sur les dentures hélicoïdales des machines d'essai.

Les conditions d'essais sont les suivantes :
- Le moteur M possède une puissance nominale de 1 MW et une vitesse nominale de 1200 tours/minute ;
- Un multiplicateur m porte cette vitesse nominale à 3060t/mn, à l'entrée de la machine A ;
- Les caractéristiques dimensionnelles des paliers soumis à l'essai sont réunies au tableau I ci-dessous. 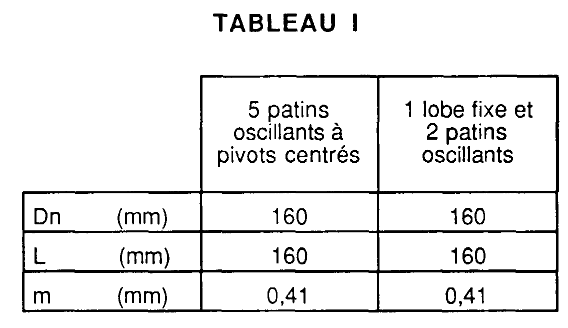
Dans ce tableau :
- Dn = diamètre nominal (diamètre du coussinet, à savoir du cercle inscrit entre le centre du lobe et les centres des deux patins) ;
- L = largeur du palier ;
- m = pré-charge.

Parmi les mesures pratiquées comparativement sur ces paliers, on doit retenir comme particulièrement caractéristiques :
1/ L'évolution des températures maximales des paliers,
2/ L'évolution des pertes de charge,
3/ La tenue aux vibrations.

### 1/ Températures

La mesure des températures est opérée au moyen de thermocouples placés en majorité à la périphérie des patins, leur partie sensible étant directement implantée dans la couche de régule et affleurant la surface interne des patins.

Le tableau II ci-après réunit les rapports, exprimés en %, entre les valeurs des températures ainsi mesurées dans le plan médian du palier 11B de la figure 7, respectivement quand ce palier est du type à cinq patins oscillants à pivots centrés et quand ce palier est du type hybride selon l'invention, pour des charges W % allant de 0 (fonctionnement à vide) à 100 (charge nominale) et pour des vitesses N % allant de 25 % à 100 % de la vitesse nominale (point de fonctionnement normal), et même au-delà de 100 % (survitesse dans certaines applications).

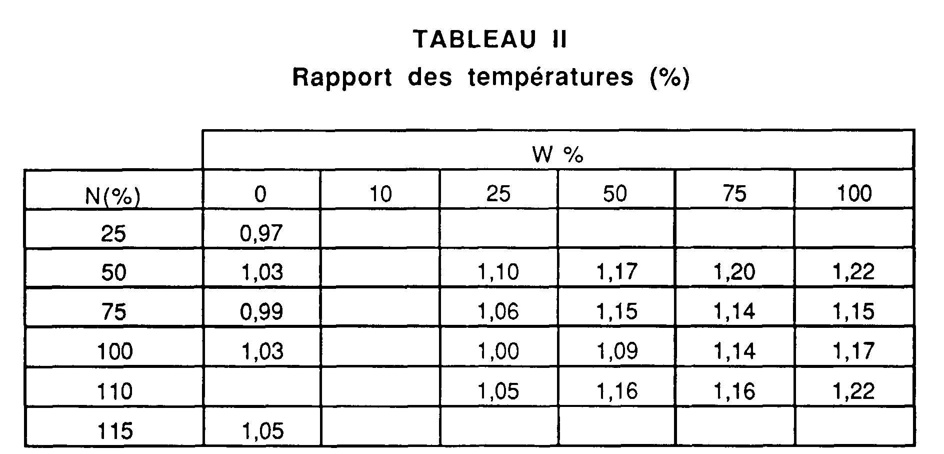

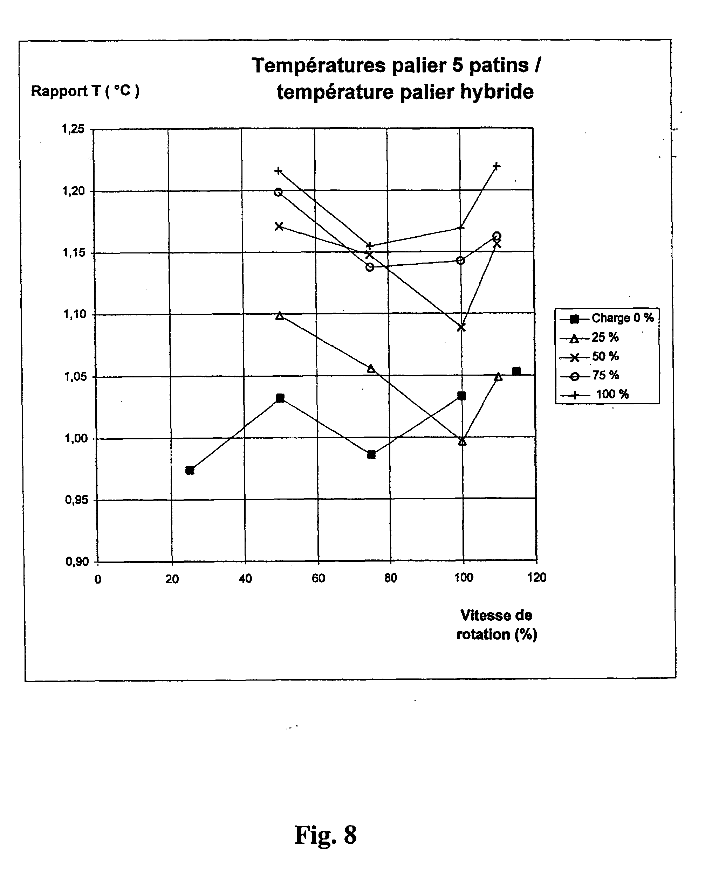

La figure 8 illustre graphiquement la variation de ce même rapport, sous forme d'une courbe pour chaque valeur de charge, en formation de la vitesse de rotation.

Ce tableau II et cette figure 8 font clairement ressortir que, pour des conditions de fonctionnement vitesse/charge équivalentes, le palier hybride selon l'invention chauffe nettement moins que le palier à patins oscillants connu, et cela notamment aux conditions nominales. La différence est considérable et justifie à elle seule la brevetabilité du palier hybride selon l'invention.

### 2/ Pertes de charge

De manière semblable, le tableau III ci-après réunit les rapports, exprimés en %, entre les valeurs, en kW, de la puissance dissipée par un palier, respectivement quand ce palier est du type à cinq patins oscillants à pivots centrés et quand ce palier est de type hybride selon l'invention, pour des combinaisons entre la vitesse N (pouvant aller de 25 à 100 % et même au-delà, de la vitesse normale), et la charge W (pouvant aller de 0 à 100 % de la charge nominale).

**TABLEAU III**

| **Rapport des pertes de charge (%)** | | | |
|---|---|---|---|
| N % | W % | Débit (l/mn) | PH (kW) |
| 30 | 0 | 1,23 | 1,08 |
| 50 | 0 | 1,31 | 1,39 |
| 75 | 0 | 1,27 | 1,07 |
| 100 | 0 | 1,23 | 1,44 |
| 115 | 0 | 1,12 | 1,49 |
| 100 | 25 | 1,24 | 1,32 |
| 100 | 50 | 1,22 | 1,21 |
| 100 | 75 | 1,21 | 1,17 |
| 50 | 100 | 1,38 | 0,77 |
| 75 | 100 | 1,25 | 0,81 |
| 100 | 100 | 1,19 | 1,07 |
| 110 | 100 | 1,19 | 1,07 |

Ce tableau III réunit également les rapports, en %, entre les débits, mesurés à charge variable, en fonction de la vitesse, pour les deux types de paliers.

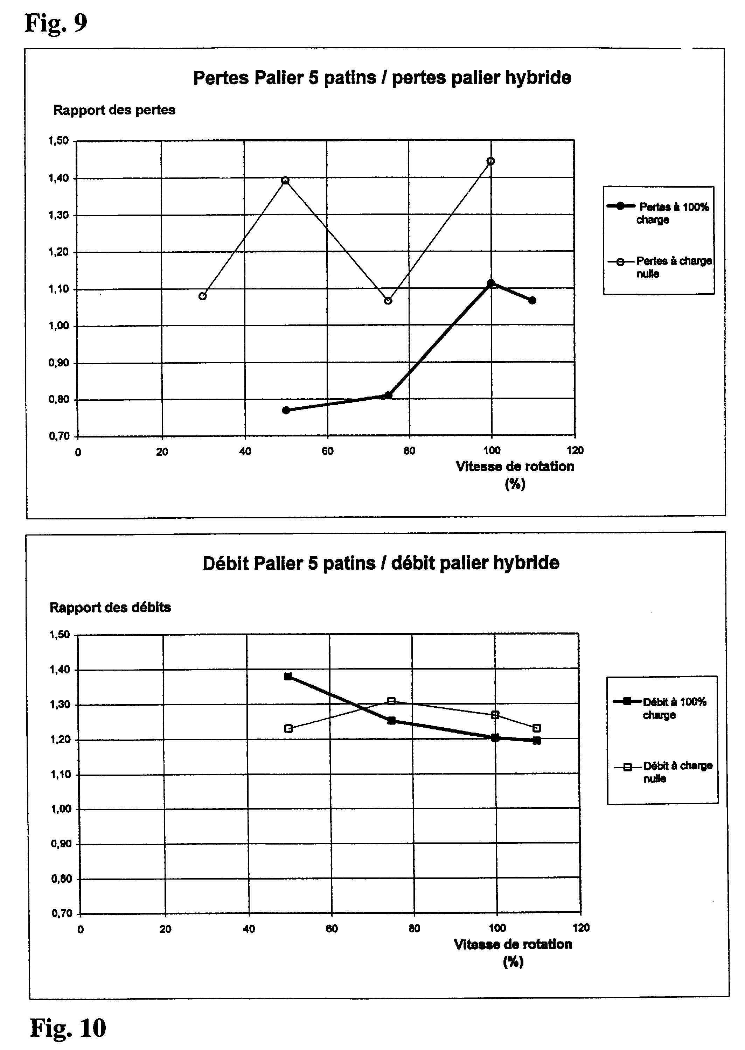

Les figures 9 et 10 illustrent graphiquement les données contenues dans le tableau III :
- La figure 9 illustre les variations du rapport des pertes entre respectivement le palier classique et le palier selon l'invention, à charge nulle et à charge nominale, en fonction de la vitesse, tandis que
- La figure 10 illustre les variations du rapport des débits, entre respectivement ces mêmes paliers, à charge nulle et à charge nominale, en fonction de la vitesse.

Ce tableau III et les courbes des figures 9 et 10 font clairement ressortir la supériorité du palier selon l'invention par rapport au palier à cinq patins à pivots décentrés connu, dans toutes les conditions de fonctionnement vitesse/charge. Ainsi, dans les conditions nominales, la puissance dissipée par le palier hybride selon l'invention est très inférieure à celle dissipée par le palier à cinq patins classique.

### 3/ Tenue aux vibrations:

La tenue comparée aux vibrations des paliers à cinq patins oscillants décentrés et des paliers hybrides selon l'invention a été évaluée :
a D'une part en mesurant l'amplitude du niveau de vibration sous charge W nulle et à vitesse N variable (allant de 25 % de la vitesse nominale jusqu'à des survitesses, de 115 % de la vitesse nominale) ;
b D'autre part en mesurant l'amplitude de vibration à la vitesse nominale, pour des charges W variables allant de 0 % à la charge nominale.

Dans les deux cas, cette amplitude est mesurée verticalement (V) et horizontalement (H), et exprimée en µm, dans les colonnes correspondantes.
a - Le tableau IV ci-après réunit les rapports, en %, entre les valeurs desdites amplitudes V et H, respectivement pour le palier à patins oscillants et le palier hybride selon l'invention, à charge nulle et à vitesse variable.

**TABLEAU IV**

| **Rapports des amplitudes de vibration (%) (Charge nulle et vitesse variable)** | | |
|---|---|---|
| N % | V | H |
| 25 | 2,01 | 1,93 |
| 50 | 1,09 | 1,45 |
| 75 | 1,24 | 1,51 |
| 100 | 1,73 | 1,42 |
| 115 | 1,70 | 1,49 |

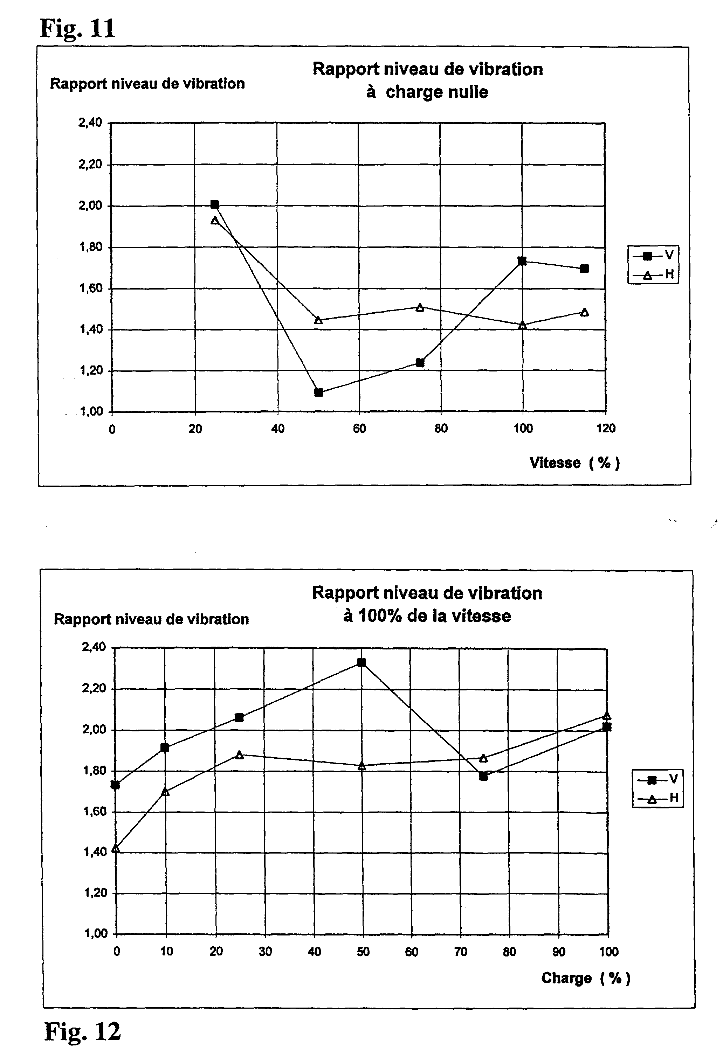

La figure 11 illustre graphiquement les variations du rapport des niveaux de vibrations, verticales et horizontales, entre les deux types de paliers, à charge nulle, en fonction de la vitesse.
b - Par ailleurs, le tableau V ci-après réunit les valeurs, en %, du rapport entre les valeurs des amplitudes de vibrations, respectivement pour le palier classique et le palier selon l'invention, à vitesse nominale (N à 100 %), en fonction de la charge W.

**TABLEAU V**

| **Rapport des amplitudes de vibrations (%) (Vitesse nominale et charge variable)** | | |
|---|---|---|
| W % | V | H |
| 0 | 1,73 | 1,42 |
| 10 | 1,92 | 1,70 |
| 25 | 2,06 | 1,88 |
| 50 | 2,33 | 1,83 |
| 75 | 1,78 | 1,87 |
| 100 | 2,02 | 2,08 |

La figure 12 illustre graphiquement les variations du rapport des niveaux de vibrations, verticales et horizontales, entre les deux types de paliers, à vitesse nominale (N = 100 %), en fonction de la charge.

L'ensemble des résultats réunis aux tableaux IV et V et aux figures 11 et 12 conduisent à constater :
- Un niveau vibratoire considérablement réduit des paliers hybrides par rapport aux paliers à patins ;
- Une décroissance générale des niveaux vibratoires des paliers hybrides lors d'une augmentation de la charge ;

En conclusion, la comparaison de la combinaison de ces trois facteurs caractéristiques : évolution de la température, évolution de la puissance dissipée et amplitudes vibratoires fait donc clairement ressortir la supériorité des paliers hybrides selon l'invention sur les paliers à patins oscillants classiques.

## Revendications

1. Palier hydrodynamique du type comportant une pluralité de patins montés oscillants par rapport à la surface périphérique interne du corps dudit palier
comportant, sur une fraction de ladite surface périphérique, un lobe fixe par rapport à cette surface, et au voisinage de chaque extrémité de ce lobe, deux patins oscillants caractérisé en ce que, ces deux patins étant séparés d'une distance sensiblement égale à la longueur d'arc d'un patin, chaque patin étant monté en butée, d'un côté sur un plot situé en aval et de l'autre sur une buse de lubrification située en amont.

2. Palier selon la revendication 1, dans lequel chaque patin est au contact tangentiel de ladite surface interne le long d'une ligne droite parallèle à l'axe du palier, ledit patin pouvant osciller dans un seul sens autour de ladite ligne de tangence pour venir prendre sa position optimale au cours de la rotation de l'arbre porté par le palier.

3. Palier selon la revendication 1, dans lequel entre chaque patin et ladite surface interne est interposée une liaison à rotule constituée par une calotte sphérique fixée sur ladite surface interne et coopérant avec une cavité sphérique correspondante de la face arrière dudit patin, ledit patin pouvant osciller dans toutes les directions autour de ladite liaison, pour venir prendre sa position optimale au cours de la rotation de l'arbre porté par le palier.

4. Palier selon la revendication 3, dans lequel l'axe de ladite cavité sphérique est décalé par rapport à l'axe de ladite calotte sphérique.

5. Palier selon l'une quelconque des revendications précédentes, dans lequel le lobe fixe occupe environ 115° d'arc, chaque patin oscillant situé de chaque côté dudit lobe fixe occupe environ 60° d'arc et l'espace libre demeurant dégagé entre les deux patins oscillants représente les 125° d'arc restants, sous déduction de l'épaisseur desdits plots et buses de lubrification et des jeux entre éléments mobiles et fixes.

## Patentansprüche

1. Hydrodynamisches Lager des Typs mit mehreren in bezug auf die innere Umfangsfläche des Körpers des Lagers oszillierend angebrachten Kufen,
mit einem in bezug auf die Umfangsfläche festen Bogenstück auf einem Bruchteil dieser Fläche und mit zwei oszillierenden Kufen in der Nähe jedes Endes dieses Bogenstücks, dadurch gekennzeichnet, daß diese beiden Kufen um eine Strecke getrennt sind, die im wesentlichen gleich der Bogenlänge einer Kufe ist, wobei jede Kufe so angebracht ist, daß sie auf einer Seite an einem stromabseitig befindlichen Anschlag und an der anderen an einer stromaufseitig befindlichen Schmierungsdüse anliegt.

2. Lager nach Anspruch 1, in dem jede Kufe längs einer zur Achse des Lagers parallelen Linie in tangentialem Kontakt mit der inneren Oberfläche ist, wobei die Kufe in einer einzigen Richtung um die Tangentiallinie oszillieren kann, um während der Drehung der vom Lager unterstützten Welle seine optimale Position einzunehmen.

3. Lager nach Anspruch 1, in dem zwischen jede Kufe und die innere Oberfläche ein Knochengelenk eingesetzt ist, das durch eine sphärische Kappe gebildet ist, die auf der inneren Oberfläche befestigt ist und mit einem entsprechenden sphärischen Hohlraum der hinteren Fläche der Kufe zusammenwirkt, wobei die Kufe in allen Richtungen um das Gelenk oszillieren kann, um während der Drehung der vom Lager unterstützten Welle ihre optimale Position einzunehmen.

4. Lager nach Anspruch 3, in dem die Achse des sphärischen Hohlraums in bezug auf die Achse der sphärischen Kappe versetzt ist.

5. Lager nach irgendeinem der vorangehenden Ansprüche, in dem das feste Bogenstück einen Bogen von ungefähr 115° überspannt, wobei jede oszillierende Kufe, die sich beiderseits des festen Bogenstücks befindet, einen Bogen von ungefähr 60° überspannt und der freie Raum, der zwischen den beiden oszillierenden Kufen vorhanden ist, die übrigen 125° des Bogens bildet, wenn die Dicke der Kontakte und Schmierungsdüsen und das Spiel zwischen den beweglichen und festen Elementen vernachlässigt werden.

## Claims

1. Hydrodynamic bearing of the type including a plurality of pads mounted tiltably relative to the internal peripheral surface of the body of the said bearing including over a fraction of the said peripheral surface, a lobe fixed relative to this surface, and in the vicinity of each end of this lobe, two tilting pads, characterised by the fact that these two pads are separated by a distance substantially equal to the length of arc of a pad, each pad being mounted abutting on the one side against a stud situated downstream and on the other against a lubrication nozzle situated upstream.

2. Bearing as described in claim 1, in which each pad is in tangential contact with the said internal surface along a straight line parallel with the axis of the bearing, the said pad being able to tilt in only one direction about the said line of tangency to adopt its optimal position during the rotation of the shaft supported by the bearing.

3. Bearing as described in claim 1, in which between each pad and the said internal surface is interposed a swivel connection consisting of a spherical segment fixed on the said internal surface and co-operating with a corresponding spherical cavity in the rear face of the said pad, the said pad being able to tilt in all directions about the said connection, to adopt its optimal position during the rotation of the shaft supported by the bearing.

4. Bearing as described in claim 3, in which the axis of the said spherical cavity is offset relative to the axis of the said spherical segment.

5. Bearing as described in any one of the preceding claims, in which the fixed lobe occupies approximately 115° of arc, each tilting pad situated on either side of the said fixed lobe occupies approximately 60° of arc and the free space remaining unoccupied between the two tilting pads represents the remaining 125° of arc, minus the thickness of the said studs and lubrication nozzles and the clearances between the mobile and fixed elements.
